# EUROPEAN PATENT SPECIFICATION

(11) **EP 2 378 748 B1**
(45) Date of publication and mention of the grant of the patent: **11.04.2018**
(21) Application number: 10154907.9
(22) Date of filing: 26.02.2010
(51) Int. Cl.: H04M 1/725, G06F 21/35, G06F 21/62, G06F 21/88, H04M 1/665, H04M 1/67

(54) **Wireless communications system providing mobile device authentication bypass based upon user-wearable security device and related methods**
Drahtloses Kommunikationssystem mit mobiler Umleitung zur Mobilgerätauthentifizierung basierend einer vom Benutzer tragbaren Sicherheitsvorrichtung und zugehörige Verfahren
Système de communication sans fil fournissant un contournement de l'authentification du dispositif mobile basé un dispositif de sécurité pouvant être porté par l'utilisateur et procédés apparentés

(43) Date of publication of application: 19.10.2011
(73) Proprietor: BlackBerry Limited, Waterloo, ON N2K 0A7 (CA)
(72) Inventor: Pasquero, Jerome, Waterloo Ontario N2L 3W8 (CA); Walker, David Ryan, Waterloo Ontario N2L 3W8 (CA); Griffin, Jason T, Waterloo Ontario N2L 3W8 (CA)
(74) Representative: Roberts, Gwilym Vaughan

(56) References cited:
- WO-A1-2006/090899
- US-A1- 2008 235 144
- US-A1- 2008 273 684
- US-B1- 6 346 886
- US-B1- 7 257 374

## Description

### Technical Field

This application relates to the field of communications, and more particularly, to mobile wireless communications devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or Near Field Communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

With NFC technology becoming more commonplace, it is now used with portable wireless communications devices in association with other short-range wireless communications, such as a wireless Bluetooth connection. For example, an NFC connection is often used to establish a wireless Bluetooth connection in which data for establishing the Bluetooth connection is communicated.

Despite the advantages of such approaches, further techniques for utilizing near field communication technologies for mobile wireless devices may be desirable in some applications.

WO-A-2006/090899 discloses a system for controlling an electronic device, comprising means associated with a master electronic device for storing at least one identifier associated with a slave electronic device capable of being linked to the master device and means for controlling the operation of an electronic device on dependence on detection of the master device and a slave device being linked when generation of that device is to take place. US-A-2008/235144 discloses an identification token which may be integrated with a wristwatch.

The invention is set out in the claims.

### Brief Description of the Drawings

FIG. 1 is a schematic block diagram of a wireless communications system in accordance with one aspect.
FIG. 2 is a schematic diagram of an embodiment of the system of FIG. 1 utilizing a user-wearable watch security device.
FIG. 3 is a schematic diagram of another embodiment of the system of FIG. 1 utilizing a user-wearable belt security device.
FIG. 4 is a schematic diagram of still another embodiment of the system of FIG. 1 utilizing a user-wearable identification (ID) holder device.
FIG. 5 is a flow diagram illustrating wireless communications method aspects in accordance with an embodiment.
FIG. 6 is a schematic block diagram illustrating exemplary components of a mobile wireless communications device that may be used with the system of FIG. 1.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a wireless communications system is disclosed herein which may include a user-wearable device including a clasp having open and closed positions, a first wireless security circuit, and a first controller coupled to the clasp and the first wireless security circuit. The system may further include a mobile wireless communications device including a portable housing, at least one input device, a second wireless security circuit carried by the portable housing and configured to communicate with the first wireless security circuit when in close proximity therewith, and a second controller carried by the portable housing and coupled to the second wireless security circuit and the at least one input device. The second controller may be configured to enable at least one mobile wireless communications device function based upon a manual entry of an authentication code via the at least one input device, and bypass the manual entry and enable the at least one mobile wireless communications device function based upon a communication from the user-wearable device and a position of the clasp. As such, the system may advantageously allow for ready access to the device function(s) without having to repeatedly provide the user authentication code, yet also prevent an unauthorized user from accessing the device function when apart from the user-wearable device or when the clasp is not in a designated position.

More particularly, the first and second controllers may be further configured to enter a paired state with one another authorizing communication therebetween, Furthermore, the second controller may be configured to not bypass the manual entry upon a first communication from the user-wearable device after the clasp has been moved from the open to the closed position. Moreover, the second controller may be further configured to bypass manual entry upon a second communication and each subsequent communication from the user-wearable device as long as the clasp remains in the closed position. Additionally, the second controller may be further configured to disable the at least one mobile wireless communications device function after one of a time-out period and time-out event.

By way of example, the first and second wireless security circuits may each comprise a near field communication (NFC) circuit. Further, the clasp may comprise first and second mating portions, and the user-wearable device may further include a wrist band carrying the first and second mating portions. In another embodiment, the user-wearable device may include a waist band having ends coupled to respective ones of the first and second mating portions. In still another embodiment, the clasp may include first and second gripping portions to grip to a user's garment, and the user-wearable device may include a token body coupled to the first and second gripping portions.

The wireless communications device may further includes a cellular transceiver carried by the portable housing and coupled to the second controller. By way of example, the clasp may comprise an electrical switch. Additionally, the at least one input device may comprise a keypad, for example.

A mobile wireless communications device, such as the one described briefly above, is also provided. Moreover, a related wireless communications method is for a user-wearable device and a mobile wireless communications device, such as those described above. The method may include enabling at least one mobile wireless communications device function based upon a manual entry of an authentication code via the at least one input device, and bypassing the manual entry and enabling the at least one mobile wireless communications device function based upon a communication from the user-wearable device and a position of the clasp.

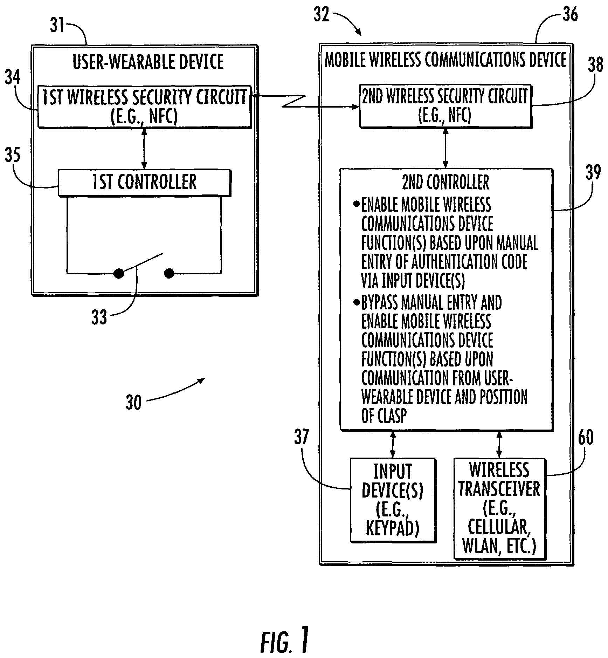

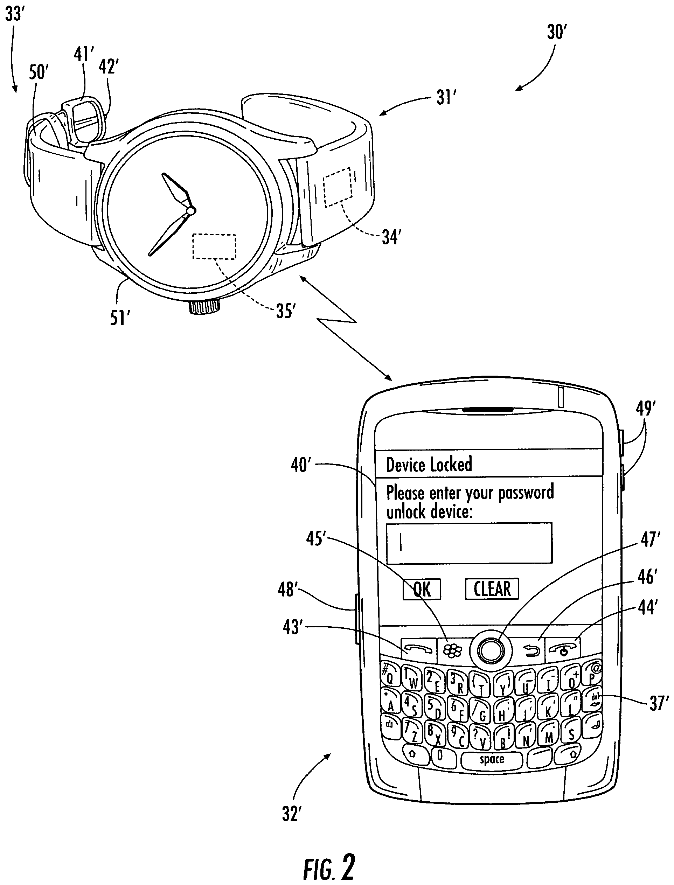

Referring initially to FIGS. 1 and 2, a wireless communications system **30** illustratively including a user-wearable device **31** and a mobile wireless communications device **32** (also referred to as a "mobile device" herein) is first described. By way of background, many mobile devices are configured to operate in an authentication or security mode, in which an authentication password or code is required to enable the device to perform functions such as sending messages (e.g., email, SMS, MMS, etc.), placing a phone call, navigating device menus (e.g., accessing the device memory, changing device settings, etc.), or running a device application (e.g., business, entertainment, finance, games, music/audio, video, maps/navigation, reference, shopping, sports/recreation, travel, utilities, weather, etc.). After a time-out period or event (e.g., a menu option to enter the security mode, auto off, etc.), the mobile device is disabled and a password is again required the next time access to a device function(s) is desired. Such device "locking" advantageously helps to prevent unauthorized access to mobile device functions in the event that the mobile device is lost or stolen.

While such a security mode is important in this regard, it may be cumbersome to repeatedly enter a password or code each time access to the mobile device is required, which may amount to dozens of times a day for corporate or highfrequency users. Moreover, it is generally recommended that passwords or codes be several characters long to enhance security and decrease the chance of the password being guessed, with mixed letter and number codes providing the greatest security. However, the use of long and complicated passwords or codes only leads to greater frustration when they have to be entered on such a frequent basis. This may be particularly so on some mobile devices that have relatively small keys or touch screens, which may increase the difficulty of entering the characters.

Generally speaking, the wireless communications system **30** advantageously provides the security of a mobile device security or password protect mode while also reducing the number of times an authorization or pass code has to be provided to enable the mobile device. In particular, the user-wearable device **31** includes a clasp **33** (which is illustrated as an electrical switch in FIGS. 1 and 2) having open and closed positions. The user-wearable device **31** further illustratively includes a first wireless security circuit **34,** and a first controller **35** coupled to the clasp and the first wireless security circuit.

The mobile device **32** illustratively includes a portable housing **36**, one or more input devices **37,** and a second wireless security circuit **38** carried by the portable housing and configured to communicate with the first wireless security circuit **34** when in close proximity therewith. By way of example, the first and second wireless security circuits **34, 38** may be near field communication (NFC) circuits which communicate using NFC communications. However, other suitable communications formats may also be used in different embodiments, as will be appreciated by those skilled in the art. Various input devices **37** may be used, such as a keypad, track ball, scroll wheel, touch screen, touch pad, buttons, etc.

The mobile device **32** also illustratively includes a second controller **39** carried by the portable housing **36** and coupled to the second wireless security circuit **38** and the input device **37.** By way of example, the second controller **39** may be implemented by a microprocessor (and associated memory) of the mobile device **32** executing computer-readable instructions, as will be appreciated by those skilled in the art. Generally speaking, the second controller **39** is configured to enable one or more mobile device functions, such as those noted above, based upon manual entry of an authentication code (e.g., an alphanumeric password or code) via the input device **37**. Moreover, the second controller **39** is further configured to bypass manual entry of the authentication code and enable the mobile device function(s) based upon a communications from the user-wearable device and a position of the clasp. In the present example, the mobile device **32** also illustratively includes a wireless transceiver **60**, such as a cellular or wireless LAN transceiver, for example, as will be appreciated by those skilled in the art. However, the wireless transceiver **60** need not be included in all embodiments of the mobile device **32** (e.g., a music player (MP3, etc.), a digital wallet with private contact information, etc.).

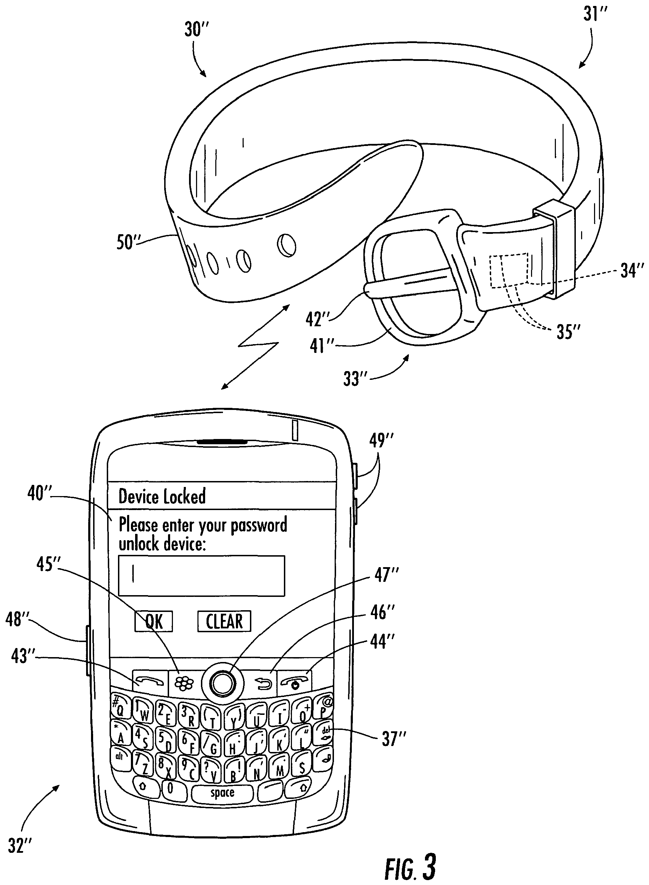

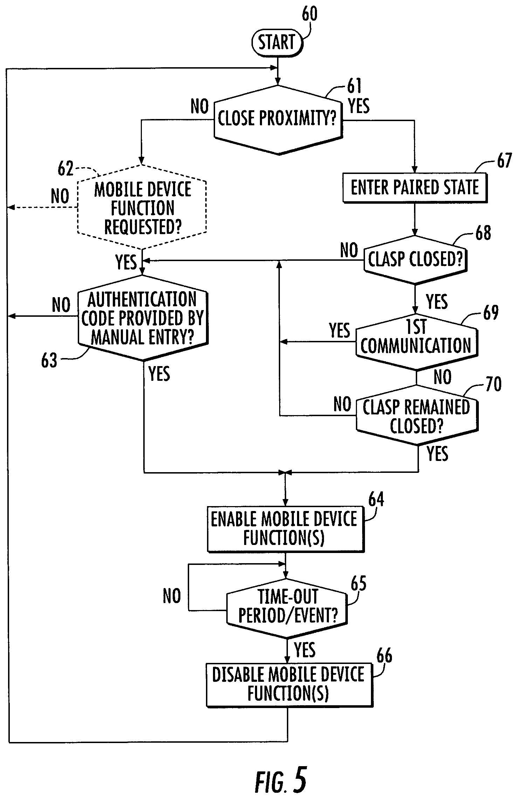

The foregoing will now be further described with reference to FIGS. 2 through 5. In the embodiment illustrated in FIG. 2, the user-wearable device **31'** is a watch in which the clasp **33'** illustratively includes first and second mating portions **41'**, **42'**, and a wrist band **50'** coupled to the first and second mating portions. In accordance with the exemplary implementation, the first and second mating portions **41'**, **42'** of the clasp **33'** define an electrical switch. Closing of the clasp **33'** forms a closed circuit, and opening the clasp opens the circuit. It should be noted that other clasp configurations may be used, such as a magnetic (e.g., Hall effect) sensor or mechanical interlocking arrangement, etc., as will be appreciated by those skilled in the art. Moreover, it should also be noted that in some embodiments, the first and second mating portions **41'**, **42'** need not be carried on the same end of the wrist band **50'** (i.e., they are on opposing ends that buckle or otherwise connect together). This is true of the belt configuration that will be described below with respect to FIG. 3 as well.

Furthermore, a time piece **51'** is also carried by the band **50',** and one or both of the first wireless security circuit **34'** and the second controller **35'** may be housed within the time piece. Alternatively, one or both of the first wireless security circuit **34'** and the second controller **35'** may be housed in the wrist band **50'**. In the illustrated embodiment, the first wireless circuit **34'** is housed in the wrist band **50'**, and the first controller **35'** is housed in the time piece **51'**.

Beginning at Block **60,** a determination as to whether the mobile device **32'** is in close proximity with the user-wearable device **31'** is made. For example, this may be when the first and second wireless security circuits **35'** are in range and begin communicating with one another, at Block **61**. In the context of NFC communications, one of the first and second wireless security circuits **35'** may operate in a passive (e.g., NFC reader) mode, while the other operates in an active (e.g., NFC tag) mode. For example, the first security circuit **35'** may operate in a passive mode to save watch battery power, and the second wireless security circuit **38'** may operate in an active mode, since mobile device batteries are typically recharged on a frequent basis and battery drain may not be as important of a consideration. Even so, mobile device battery drain from NFC operation may be a consideration in some embodiments, and an NFC power saving mode may be used accordingly, as will be appreciated by those skilled in the art. It should also be noted that other NFC operational modes, such as peer-to-peer operation, may also be used.

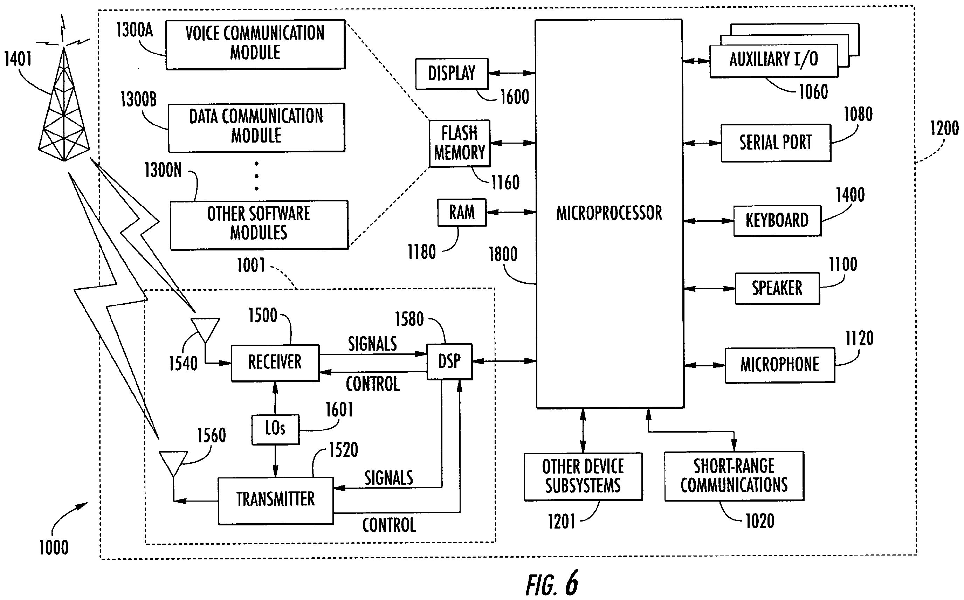

In some embodiments, such as in the example illustrated in FIG. 6, bringing the mobile device **32'** and user-wearable device **31'** in close proximity is considered as a request to enable a mobile device function(s), That is, moving the mobile device **32'** and the user-wearable device **31'** next to one another causes the mobile device to "wake up" and generate an authentication code prompt on a display **40'**, as seen in FIG. 3.

However, a request to enable the mobile device function(s) may also be made when the mobile device **32'** and user-wearable device **31'** are not in close proximity, at Block **63.** For example, a user may be carrying the mobile device **32'**, but not the user-wearable device **31'**. In such case, access to a mobile device function may be requested in different ways. For example, when the mobile device **32'** is powered on, the second controller **39'** may initially place the mobile device in the password protected or security (i.e., disabled) mode and prompt for the authentication code before enabling mobile device functions. In other words, turning the mobile device **32'** on (whether manually or automatically based upon an auto on/off feature) may be considered a request to access mobile device functions.

Another possibility is that the input device **37'** (here a keypad) provides an input, such as through pressing of one of the keys on the keypad, which initiates the authentication prompt. Similarly, other buttons or keys may also indicate to the second controller **39'** that a device function is being requested, such as an "off hook" phone button **43'**, an "on hook" phone button **44'**, a menu button **45'**, a back or escape button **46'**, a track ball **47'** or other similar input device (e.g., touch screen, touch pad, scroll wheel, etc.), a convenience key **48'** or a volume key **49'.**

In some embodiments, a combination of close proximity between the mobile device **32'** and the user-wearable device **31'** plus input from the input device(s) **37'**, may be required to initiate communications between the first and second wireless security circuits **34'**, **38'** and request access to a mobile device function. This may be desirable, for example, in the case where the mobile device **32'** is carried in a relatively close position to the user-wearable device **31'** (e.g., on a waistband holder, in a pocket, etc.), where the two would repeatedly or continuously be in close proximity when access to a mobile function(s) was not required.

When access to a device function(s) is requested, if the user-wearable device **31'** and mobile device **32'** are not in close proximity, the second controller **39'** checks to see if the proper authentication code is manually entered or provided, at Block **63**, at which point one or more (or all) mobile device functions are enabled, at Block **64.** Otherwise (i.e., a proper authentication code is not provided), the mobile device function(s) remains disabled. Upon the occurrence of a time-out period or event (Block **65**), as discussed above, the mobile device function(s) is again disabled, at Block **66.**

When the user-wearable device **31'** and mobile device **32'** are in close proximity and a mobile device function has been requested (i.e., by bringing them into close proximity, pressing a button/key, etc., as noted above), the second controller **39** communicates with the first controller **35** via the first and second wireless security circuits **34, 38** to enter a paired state, at Block **67**, as will be appreciated by those skilled in the art. Next, a determination is made as to whether the clasp **33'** is in the closed position, at Block **69.** By way of example, the first controller **35** may comprise state machine circuitry that monitors which state (i.e., position) the clasp **33'** is in, and whether there has been a change in this state, as will be appreciated by those skilled in the art.

If the clasp **33'** is not closed, then the second controller **39** proceeds to the authentication step discussed above at Block **63**. If the clasp **33'** remains open (e.g., the user-wearable device **31'** is not donned by the user), or the mobile device **32'** is not within close proximity of the user-wearable device, then the authentication code would be required each subsequent time a mobile device function is requested (i.e., just like a normal password protect or security mode would operate, as discussed above).

On the other hand, if the clasp **33'** is closed when the mobile device function(s) is requested, then it is determined whether this is a first or initial communication between the user-wearable device **31'** and the mobile device **32',** at Block **69.** That is, it is determined whether this is the first time that the user-wearable device **31'** and the mobile device **32'** have communicated since the clasp **33'** was closed. If so, then the authentication code is still required to enable the mobile device function(s) (Block **63**), as similarly described above. In other words, the second controller **39'** is configured to not bypass the manual entry upon a first communication from the user-wearable device **31'** after the clasp **33'** has been moved from the open to the closed position.

However, if this is a second or subsequent communication between the user-wearable device **31'** and the mobile device **32'** since the clasp **33'** was closed and the proper authentication code was previously provided, and the clasp has remained closed (Block **70**), then the mobile device is enabled without requiring manual entry of the authentication code. That is, manual entry of the authentication code is advantageously bypassed, allowing the mobile device function to be initiated simply by bringing the user-wearable device **31'** and the mobile device **32'** into close proximity, with one another. However, if the clasp **33'** has been opened since the first communication, then manual entry of the authentication code would be required, as described above.

This approach not only provides for expedited access to mobile device functions without the need for repeated entry of an authentication code (i.e., so long as the clasp **33'** remains closed), it also advantageously helps prevent unauthorized access to the device functions in the event the mobile device **32'** is lost or stolen. That is, if the mobile device **32'** is not in close proximity to the user-wearable device **31'**, the mobile device functions will not be authorized without the proper authentication code. Moreover, even if the user-wearable device **31'** and mobile device **32'** were lost or stolen together, opening of the clasp **33'** would cause the mobile device to revert back to the standard password entry mode, requiring an authentication password or code to be entered, and thereby protect against unauthorized access to the mobile device functions and data. That is, the user-wearable device **31'** cannot be removed without opening the clasp **33'** (aside from cutting). However, wiring to the clasp **33'** may extend through the wrist band **50'** and be considered as part of the clasp so that, if severed, this would also cause an open circuit condition, and thus disable the authentication code bypass, as will be appreciated by those skilled in the art.

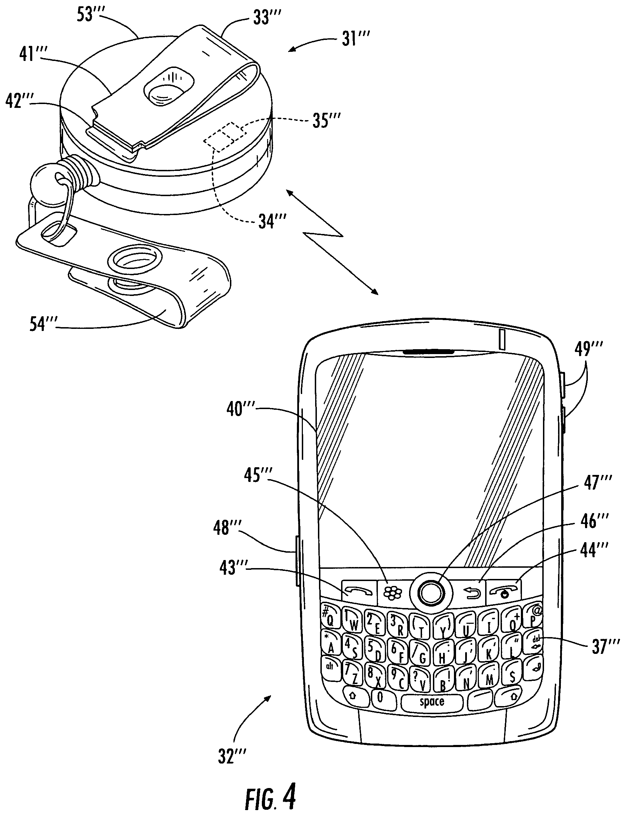

Another advantageous embodiment is shown in FIG. 3, in which the user-wearable device **31"** is a belt, i.e., to be worn around a user's waist. In other embodiments the user-wearable device may be implemented as a piece of jewelry, such as a bracelet or necklace, for example. Still another advantageous embodiment is shown in FIG. 4, in which the user-wearable device **31'''** is an identification (ID) card reel, and the clasp **33"'** takes the form of a clip including first and second gripping portions **41'"**, **42'"** to grip to a user's garment carried on a reel **53'"**. A holder **54'"** for a token body (e.g., an ID or security card) is connected to the reel **53'''**. It should be noted that the reel **53'"** need not be used in all embodiments, i.e., the clasp **33"'** could be directly coupled to the holder **54'"** (or directly to an ID or token) in some implementations. Circuit contacts, magnets, etc., may be used to detect when the first and second gripping portions **41"**, **42"** are in the open or closed position, as will be appreciated by those skilled in the art. Other embodiments of user-wearable devices may include: a button on an article of clothing (e.g., shirts, pants); a tie; shoelaces, etc. Generally speaking, items that can be in one of two physical states (e.g., on/off, buttoned/unbuttoned, tied/untied, etc.) which the user cannot part with or remove without switching the state may be suitable user-wearable devices, as will be appreciated by those skilled in the art.

Exemplary components of a mobile wireless communications device **1000** that may be used in accordance with an exemplary embodiment are further described below with reference to FIG. 6. The device **1000** illustratively includes a housing **1200,** a keypad, **1400** and an output device **1600.** The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000,** in response to actuation of keys on the keypad, **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080**, **1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580**, and local oscillators (LOS) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAG™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the Mobile device. **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come so the mind of one skilled in the art having the benefit of the teachings presented in the foregoing descriptions and the associated drawings. Therefore, it is understood that various modifications and embodiments are intended to be included within the scope of the appended claims.

## Claims

1. A wireless communications system (30) comprising:
a user-wearable device (31) comprising
a clasp (33) having open and closed positions,
a first wireless security circuit (34), and
a first controller (35) coupled to said clasp and said first wireless security circuit; and
a mobile wireless communications device (32) comprising
a portable housing (36),
at least one input device (37),
a second wireless security circuit (38) carried by said portable housing and configured to communicate with said first wireless security circuit when in close proximity therewith, and
a second controller (39) carried by said portable housing, coupled to said second wireless security circuit and said at least one input device and configured to
upon a first initiation of communications between the first and second wireless security circuits, determine the position of the clasp and enable at least one function of said mobile wireless communications device based upon a manual entry requirement of an authentication code via said at least one input device, and
upon subsequent occurrences of communications between the first and second wireless security circuits, bypass the manual entry requirement and enable at least one function based upon a communication from said user-wearable device and said clasp remaining in the closed position,
else enable at least one function of said mobile wireless communications device based upon a manual entry requirement of an authentication code via said at least one input device.

2. The wireless communications system (30) of Claim 1 wherein said first and second controllers (35,39) are further configured to enter a paired state with one another authorizing communication therebetween.

3. The wireless communications system (30) of Claim 1 wherein said second controller (39) is configured to not bypass the manual entry requirement upon a first communication from said user-wearable device (31) after said clasp (33) has been moved from the open to the closed position.

4. The wireless communications system (30) of Claim 3 wherein said second controller (39) is further configured to bypass the manual entry requirement upon a second communication and each subsequent communication from said user-wearable device (31) as long as said clasp remains in the closed position.

5. The wireless communications system (30) of Claim 1 wherein said second controller (39) is further configured to disable the at least one function after one of a time-out period and time-out event.

6. The wireless communications system (30) of Claim 1 wherein said first and second wireless security circuits (34,38) each comprises a near field communication (NFC) circuit.

7. The wireless communications system (30') of Claim 1 wherein said clasp (33') comprises first and second mating portions; and wherein said user-wearable device further comprises a wrist band carrying the first and second mating portions (41',42').

8. The wireless communications system (30") of Claim 1 wherein said clasp comprises first and second mating portions (41", 42"); and wherein said user-wearable device further comprises a waist band (50") having ends coupled to respective ones of the first and second mating portions.

9. The wireless communications system (30''') of Claim 1 wherein said clasp (33''') comprises first and second gripping portions (41''',42''') to grip to a user's garment; and wherein said user-wearable device comprises a token body coupled to the first and second gripping portions.

10. A mobile wireless communications device (32) for use with a user-wearable device (31) comprising a clasp (33) having open and closed positions, a first wireless security circuit (34), and a first controller (35) coupled to the clasp and the first wireless security circuit, the mobile wireless communications device comprising:
a portable housing (36);
at least one input device (37);
a second wireless security circuit (38) carried by said portable housing and configured to communicate with the first wireless security circuit when in close proximity therewith; and
a second controller (39) carried by said portable housing, coupled to said second wireless security circuit and said at least one input device and configured to
upon a first initiation of communications between the first and second wireless security circuits, determine the position of the clasp and enable at least one function of the mobile wireless communications device based upon a manual entry requirement of an authentication code via said at least one input device, and
upon subsequent occurrences of communications between the first and second wireless security circuits, bypass the manual entry requirement and enable at least one function based upon a communication from the user-wearable device and the clasp remaining in the closed position, else enable at least one function of said mobile wireless communications device based upon a manual entry requirement of an authentication code via said at least one input device.

11. The mobile wireless communications device (32) of Claim 10 wherein said second controller (39) is further configured to enter a paired state with the first controller (35) authorizing communication therebetween.

12. The mobile wireless communications device (32) of Claim 10 wherein said second controller (39) is configured to not bypass the manual entry requirement upon receiving a first communication from the user-wearable device (31) indicating the clasp (33) has been moved from the open to the closed position.

13. A wireless communications method for a user-wearable device (31) comprising a clasp (33) having open and closed positions, a first wireless security circuit (34), and a mobile wireless communications device (32) comprising a portable housing (36), at least one input device (37), and a second wireless security circuit (38) carried by the portable housing and configured to communicate with the first wireless security circuit when in close proximity therewith, the method comprising:
upon a first initiation of communications between the first and second wireless security circuits, determine the position of the clasp and enabling at least one function of the mobile wireless communications device based upon a manual entry requirement of an authentication code via the at least one input device; and
upon subsequent occurrences of communications between the first and second wireless security circuits, bypassing the manual entry requirement and enabling at least function based upon a communication from the user-wearable device and the clasp remaining in the closed position, else enable at least one function of said mobile wireless communications device based upon a manual entry requirement of an authentication code via said at least one input device.

14. The method of Claim 13 wherein bypassing further comprises not bypassing the manual entry upon a first communication from the user-wearable device (31) after the clasp (33) has been moved from the open to the closed position.

15. The method of Claim 14 wherein bypassing further comprises bypassing the manual entry requirement upon a second communication and each subsequent communication from the user-wearable device (31) as long as the clasp (33) remains in the closed position.

## Patentansprüche

1. Drahtloses Kommunikationssystem (30), umfassend:
eine vom Benutzer tragbare Vorrichtung (31), umfassend
eine Schnalle (33) mit offenen und geschlossenen Positionen,
einen ersten drahtlosen Sicherheitskreis (34) und
eine erste Steuerung (35), die an die Schnalle und den ersten drahtlosen Sicherheitskreis gekoppelt ist; und
eine mobile drahtlose Kommunikationsvorrichtung (32), umfassend
ein tragbares Gehäuse (36),
zumindest eine Eingabevorrichtung (37),
einen zweiten drahtlosen Sicherheitskreis (38), der durch das tragbare Gehäuse getragen ist und zum Kommunizieren mit dem ersten drahtlosen Sicherheitskreis, wenn er in enger Nähe dazu ist, konfiguriert ist, und
eine zweite Steuerung (39), die durch das tragbare Gehäuse getragen ist, an den zweiten drahtlosen Sicherheitskreis und die zumindest eine Eingabevorrichtung gekoppelt ist und zu folgendem konfiguriert ist:
nach einer ersten Kommunikationseinleitung zwischen dem ersten und zweiten drahtlosen Sicherheitskreis, Bestimmen der Position der Schnalle und Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung, und
nach nachfolgenden Kommunikationsvorgängen zwischen dem ersten und zweiten drahtlosen Sicherheitskreis, Umleiten der manuellen Eingabeanforderung und Aktivieren von zumindest einer Funktion basierend auf einer Kommunikation von der vom Benutzer tragbaren Vorrichtung und dem Verbleiben der Klappe in der geschlossenen Position, sonst Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung.

2. Drahtloses Kommunikationssystem (30) nach Anspruch 1, wobei die erste und zweite Steuerung (35, 39) ferner zum Eintreten in einen gepaarten Zustand miteinander konfiguriert sind, wodurch Kommunikation zwischen ihnen bewilligt wird.

3. Drahtloses Kommunikationssystem (30) nach Anspruch 1, wobei die zweite Steuerung (39) dazu konfiguriert ist, die manuelle Eingabeanforderung nach einer ersten Kommunikation von der vom Benutzer tragbaren Vorrichtung (31) nicht umzuleiten, nachdem die Schnalle (33) aus der offenen in die geschlossene Position bewegt wurde.

4. Drahtloses Kommunikationssystem (30) nach Anspruch 3, wobei die zweite Steuerung (39) ferner dazu konfiguriert ist, die manuelle Eingabeanforderung nach einer zweiten Kommunikation und jeder nachfolgenden Kommunikation von der vom Benutzer tragbaren Vorrichtung (31) umzuleiten, solange die Schnalle in der geschlossenen Position verbleibt.

5. Drahtloses Kommunikationssystem (30) nach Anspruch 1, wobei die zweite Steuerung (39) ferner zum Deaktivieren der zumindest einen Funktion nach einem einer Zeitablaufperiode und eines Zeitablaufereignisses konfiguriert ist.

6. Drahtloses Kommunikationssystem (30) nach Anspruch 1, wobei der erste und zweite drahtlose Sicherheitskreis (34, 38) jeder einen Nahfeldkommunikations- (NFC-) Kreis umfasst.

7. Drahtloses Kommunikationssystem (30') nach Anspruch 1, wobei die Schnalle (33') erste und zweite zusammenpassende Abschnitte umfasst; und wobei die vom Benutzer tragbare Vorrichtung ferner ein Armband umfasst, das die ersten und zweiten zusammenpassenden Abschnitte (41', 42') trägt.

8. Drahtloses Kommunikationssystem (30") nach Anspruch 1, wobei die Schnalle erste und zweite zusammenpassende Abschnitte (41", 42") umfasst; und wobei die vom Benutzer tragbare Vorrichtung ferner ein Armband (50") mit Enden umfasst, die an jeweilige der ersten und zweiten zusammenpassenden Abschnitte gekuppelt sind.

9. Drahtloses Kommunikationssystem (30''') nach Anspruch 1, wobei die Schnalle (33''') erste und zweite Greifabschnitte (41''', 42''') zum Greifen an ein Kleidungsstück des Benutzers umfasst; und wobei die vom Benutzer tragbare Vorrichtung einen Token-Körper umfasst, der an die ersten und zweiten Greifabschnitte gekuppelt ist.

10. Mobile drahtlose Kommunikationsvorrichtung (32) zum Gebrauch mit einer vom Benutzer tragbaren Vorrichtung (31), umfassend eine Schnalle (33) mit offenen und geschlossenen Positionen, einen ersten drahtlosen Sicherheitskreis (34) und eine erste Steuerung (35), die an die Schnalle und den ersten drahtlosen Sicherheitskreis gekoppelt ist, wobei die mobile drahtlose Kommunikationsvorrichtung folgendes umfasst:
ein tragbares Gehäuse (36);
zumindest eine Eingabevorrichtung (37);
einen zweiten drahtlosen Sicherheitskreis (38), der durch das tragbare Gehäuse getragen ist und zum Kommunizieren mit dem ersten drahtlosen Sicherheitskreis, wenn er in enger Nähe dazu ist, konfiguriert ist; und
eine zweite Steuerung (39), die durch das tragbare Gehäuse getragen ist, an den zweiten drahtlosen Sicherheitskreis und die zumindest eine Eingabevorrichtung gekoppelt ist und zu folgendem konfiguriert ist:
nach einer ersten Kommunikationseinleitung zwischen dem ersten und zweiten drahtlosen Sicherheitskreis, Bestimmen der Position der Schnalle und Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung, und
nach nachfolgenden Kommunikationsvorgängen zwischen dem ersten und zweiten drahtlosen Kreis, Umleiten der manuellen Eingabeanforderung und Aktivieren von zumindest einer Funktion basierend auf einer Kommunikation von der vom Benutzer tragbaren Vorrichtung und dem Verbleiben der Klappe in der geschlossenen Position, sonst Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung.

11. Mobile drahtlose Kommunikationsvorrichtung (32) nach Anspruch 10, wobei die zweite Steuerung (39) ferner zum Eintreten in einen gepaarten Zustand mit der ersten Steuerung (35) konfiguriert ist, wodurch Kommunikation zwischen ihnen bewilligt wird.

12. Mobile drahtlose Kommunikationsvorrichtung (32) nach Anspruch 10, wobei die zweite Steuerung (39) dazu konfiguriert ist, die manuelle Eingabeanforderung nach dem Empfangen einer ersten Kommunikation von der vom Benutzer tragbaren Vorrichtung (31) nicht umzuleiten, die anzeigt, dass die Schnalle (33) aus der offenen in die geschlossene Position bewegt wurde.

13. Drahtloses Kommunikationsverfahren für eine von einem Benutzer getragene Vorrichtung (31), umfassend eine Schnalle (33) mit offenen und geschlossenen Positionen, einen ersten drahtlosen Sicherheitskreis (34) und eine mobile drahtlose Kommunikationsvorrichtung (32), umfassend ein tragbares Gehäuse (36), zumindest eine Eingabevorrichtung (37) und einen zweiten drahtlosen Sicherheitskreis (38), der durch das tragbare Gehäuse getragen ist und zum Kommunizieren mit dem ersten drahtlosen Sicherheitskreis, wenn er in enger Nähe dazu ist, konfiguriert ist; das Verfahren umfassend:
nach einer ersten Kommunikationseinleitung zwischen dem ersten und zweiten drahtlosen Sicherheitskreis, Bestimmen der Position der Schnalle und Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung; und
nach nachfolgenden Kommunikationsvorgängen zwischen dem ersten und zweiten drahtlosen Sicherheitskreis, Umleiten der manuellen Eingabeanforderung und Aktivieren von zumindest einer Funktion basierend auf einer Kommunikation von der vom Benutzer tragbaren Vorrichtung und dem Verbleiben der Klappe in der geschlossenen Position, sonst Aktivieren von zumindest einer Funktion der mobilen drahtlosen Kommunikationsvorrichtung basierend auf einer manuellen Eingabeanforderung eines Authentifizierungscodes über die zumindest eine Eingabevorrichtung.

14. Verfahren nach Anspruch 13, wobei das Umleiten ferner das Nichtumleiten der manuellen Eingabe nach einer ersten Kommunikation von der vom Benutzer tragbaren Vorrichtung (31) umfasst, nachdem die Schnalle (33) aus der offenen in die geschlossene Position bewegt wurde.

15. Verfahren nach Anspruch 14, wobei das Umleiten ferner das Umleiten der manuellen Eingabeanforderung nach einer zweiten Kommunikation und jeder nachfolgenden Kommunikation von der vom Benutzer tragbaren Vorrichtung (31) umfasst, solange die Schnalle (33) in der geschlossenen Position verbleibt.

## Revendications

1. Système de communication sans fil (30) comprenant :
un dispositif pouvant être porté par l'utilisateur (31) comprenant :
un fermoir (33) ayant des positions ouverte et fermée,
un premier circuit de sécurité sans fil (34), et
un premier dispositif de commande (35) couplé audit fermoir et audit premier circuit de sécurité sans fil ; et
un dispositif de communication sans fil mobile (32) comprenant :
un boîtier portable (36),
au moins un dispositif d'entrée (37),
un deuxième circuit de sécurité sans fil (38) porté par ledit boîtier portable et configuré pour communiquer avec ledit premier circuit de sécurité sans fil lorsqu'il se trouve à proximité immédiate de celui-ci, et
un deuxième dispositif de commande (39) porté par ledit boîtier portable, couplé audit deuxième circuit de sécurité sans fil et audit au moins un dispositif d'entrée et configuré pour :
déterminer, lors d'une première initiation de communications entre les premier et deuxième circuits de sécurité sans fil, la position du fermoir et activer au moins une fonction dudit dispositif de communication sans fil mobile sur la base d'une exigence de saisie manuelle d'un code d'authentification via ledit au moins un dispositif d'entrée, et
contourner, lors d'occurrences ultérieures de communications entre les premier et deuxième circuits de sécurité sans fil, l'exigence de saisie manuelle et activer au moins une fonction sur la base d'une communication à partir dudit dispositif pouvant être porté par l'utilisateur et dudit fermoir restant dans la position fermée,
activer sinon au moins une fonction dudit dispositif de communication sans fil mobile sur la base d'une exigence de saisie manuelle d'un code d'authentification via ledit au moins un dispositif d'entrée.

2. Système de communication sans fil (30) de la revendication 1, dans lequel lesdits premier et deuxième dispositifs de commande (35, 39) sont en outre configurés pour entrer dans un état apparié l'un avec l'autre autorisant une communication entre eux.

3. Système de communication sans fil (30) de la revendication 1, dans lequel ledit deuxième dispositif de commande (39) est configuré pour ne pas contourner l'exigence de saisie manuelle lors d'une première communication à partir dudit dispositif pouvant être porté par l'utilisateur (31) après que ledit fermoir (33) a été déplacé de la position ouverte à la position fermée.

4. Système de communication sans fil (30) de la revendication 3, dans lequel ledit deuxième dispositif de commande (39) est en outre configuré pour contourner l'exigence de saisie manuelle lors d'une deuxième communication et de chaque communication ultérieure à partir dudit dispositif pouvant être porté par l'utilisateur (31) tant que ledit fermoir reste dans la position fermée.

5. Système de communication sans fil (30) de la revendication 1, dans lequel ledit deuxième dispositif de commande (39) est en outre configuré pour désactiver l'au moins une fonction après l'un d'une période de dépassement de temps et d'un événement de dépassement de temps.

6. Système de communication sans fil (30) de la revendication 1, dans lequel lesdits premier et deuxième circuits de sécurité sans fil (34, 38) comprennent chacun un circuit de communication en champ proche (NFC).

7. Système de communication sans fil (30') de la revendication 1, dans lequel ledit fermoir (33') comprend des première et deuxième parties d'accouplement ; et dans lequel ledit dispositif pouvant être porté par l'utilisateur comprend en outre un bracelet portant les première et deuxième parties d'accouplement (41', 42').

8. Système de communication sans fil (30") de la revendication 1, dans lequel ledit fermoir comprend des première et deuxième parties d'accouplement (41", 42") ; et dans lequel ledit dispositif pouvant être porté par l'utilisateur comprend en outre une ceinture (50") ayant des extrémités couplées aux extrémités respectives des première et deuxième parties d'accouplement.

9. Système de communication sans fil (30''') de la revendication 1, dans lequel ledit fermoir (33''') comprend des première et deuxième parties d'accrochage (41''', 42''') pour s'accrocher au vêtement d'un utilisateur ; et dans lequel ledit dispositif pouvant être porté par l'utilisateur comprend un corps de jeton couplé aux première et deuxième parties d'accrochage.

10. Dispositif de communication sans fil mobile (32) destiné à être utilisé avec un dispositif pouvant être porté par l'utilisateur (31) comprenant un fermoir (33) ayant des positions ouverte et fermée, un premier circuit de sécurité sans fil (34) et un premier dispositif de commande (35) couplé au fermoir et au premier circuit de sécurité sans fil, le dispositif de communication sans fil mobile comprenant :
un boîtier portable (36) ;
au moins un dispositif d'entrée (37) ;
un deuxième circuit de sécurité sans fil (38) porté par ledit boîtier portable et configuré pour communiquer avec le premier circuit de sécurité sans fil lorsqu'il se trouve à proximité immédiate de celui-ci ; et
un deuxième dispositif de commande (39) porté par ledit boîtier portable, couplé audit deuxième circuit de sécurité sans fil et audit au moins un dispositif d'entrée et configuré pour :
déterminer, lors d'une première initiation de communications entre les premier et deuxième circuits de sécurité sans fil, la position du fermoir et activer au moins une fonction du dispositif de communication sans fil mobile sur la base d'une exigence de saisie manuelle d'un code d'authentification via ledit au moins un dispositif d'entrée, et
contourner, lors d'occurrences ultérieures de communications entre les premier et deuxième circuits de sécurité sans fil, l'exigence de saisie manuelle et activer au moins une fonction sur la base d'une communication à partir du dispositif pouvant être porté par l'utilisateur et du fermoir restant dans la position fermée, sinon activer au moins une fonction dudit dispositif de communication sans fil mobile sur la base d'une exigence de saisie manuelle d'un code d'authentification via ledit au moins un dispositif d'entrée.

11. Dispositif de communication sans fil mobile (32) de la revendication 10, dans lequel ledit deuxième dispositif de commande (39) est en outre configuré pour entrer dans un état apparié avec le premier dispositif de commande (35) autorisant une communication entre eux.

12. Dispositif de communication sans fil mobile (32) de la revendication 10, dans lequel ledit deuxième dispositif de commande (39) est configuré pour ne pas contourner l'exigence de saisie manuelle lors de la réception d'une première communication à partir du dispositif pouvant être porté par l'utilisateur (31) indiquant que le fermoir (33) a été déplacé de la position ouverte à la position fermée.

13. Procédé de communication sans fil pour un dispositif pouvant être porté par l'utilisateur (31) comprenant un fermoir (33) ayant des positions ouverte et fermée, un premier circuit de sécurité sans fil (34) et un dispositif de communication sans fil mobile (32) comprenant un boîtier portable (36), au moins un dispositif d'entrée (37) et un deuxième circuit de sécurité sans fil (38) porté par le boîtier portable et configuré pour communiquer avec le premier circuit de sécurité sans fil lorsqu'il se trouve à proximité immédiate de celui-ci, le procédé consistant à :
déterminer, lors d'une première initiation de communications entre les premier et deuxième circuits de sécurité sans fil, la position du fermoir et activer au moins une fonction du dispositif de communication sans fil mobile sur la base d'une exigence de saisie manuelle d'un code d'authentification via l'au moins un dispositif d'entrée ; et
contourner, lors d'occurrences ultérieures de communications entre les premier et deuxième circuits de sécurité sans fil, l'exigence de saisie manuelle et d'activer au moins une fonction sur la base d'une communication à partir du dispositif pouvant être porté par l'utilisateur et du fermoir restant dans la position fermée, sinon activer au moins une fonction dudit dispositif de communication sans fil mobile sur la base d'une exigence de saisie manuelle d'un code d'authentification via ledit au moins un dispositif d'entrée.

14. Procédé de la revendication 13, dans lequel le contournement consiste en outre à ne pas contourner la saisie manuelle lors d'une première communication à partir du dispositif pouvant être porté par l'utilisateur (31) après que le fermoir (33) a été déplacé de la position ouverte à la position fermée.

15. Procédé de la revendication 14, dans lequel le contournement consiste en outre à contourner l'exigence de saisie manuelle lors d'une deuxième communication et de chaque communication ultérieure à partir du dispositif pouvant être porté par l'utilisateur (31) tant que le fermoir (33) reste dans la position fermée.
